# EUROPEAN PATENT APPLICATION

(11) **EP 4 542 812 A1**
(43) Date of publication of application: **23.04.2025**
(21) Application number: 22946642.0
(22) Date of filing: 22.12.2022
(51) Int. Cl.: H02J 3/38

(54) **PHOTOVOLTAIC SYSTEM AND UPDATE METHOD FOR NETWORKING OF OPTIMIZER THEREOF**

(30) Priority: 17.06.2022 CN 202210684815
(71) Applicant: Sungrow (Shanghai) Co., Ltd., Shanghai 201203 (CN)
(72) Inventor: XU, Chenjia, Shanghai 201203 (CN); YAO, Keliang, Shanghai 201203 (CN); YANG, Yu, Shanghai 201203 (CN); WANG, Xinyu, Shanghai 201203 (CN); TAO, Tinghuan, Shanghai 201203 (CN)
(74) Representative: Zacco Norway AS
(86) International application number: PCT/CN2022/140967
(87) International publication number: WO 2023/240977

(57) **Abstract**

The present application provides a photovoltaic system and an update method for networking of an optimizer thereof. The update method for networking of the optimizer comprises: first, an inverter obtains a serial number of an optimizer in each photovoltaic string within a preset time period, and determines whether an optimizer corresponding to each serial number has completed networking; if at least one optimizer has not completed networking, it is indicated that the optimizer is a replaced or newly added optimizer, and at this time, the inverter controls or keeps the operation of an optimizer that has completed networking, and controls the active bypass of an optimizer that has not completed networking; and then, the inverter compares the output current of each of the optimizers that have not completed networking with the current of each photovoltaic string to determine a photovoltaic string to which each of the optimizers that have not completed networking belongs. In this way, the automatic update of the networking of the replaced or newly added optimizer is realized without a manual input process, and the problems of an increase in the number of times of manual operation and maintenance and time waste caused thereby are avoided.

## Description

The present application claims the priority to Chinese Patent Application No. 202210684815.0, titled "PHOTOVOLTAIC SYSTEM AND UPDATE METHOD FOR NETWORKING OF OPTIMIZER THEREOF", filed on June 17, 2022 with the China National Intellectual Property Administration, which is incorporated herein by reference in its entirety.

### FIELD

The present application relates to the technical field of photovoltaic power generation, and in particular to a photovoltaic system and an updating method of networking of optimizers in a photovoltaic system.

### BACKGROUND

An optimizer in a photovoltaic system, i.e., a photovoltaic power optimizer, is a module level power electronic (MLPE) with a direct current input and a direct current output. The optimizer is connected in series with a photovoltaic component and adopts a technology of predicting current and voltage to ensure that the photovoltaic component can be always in an optimal working condition. In this way, an impact of shading photovoltaic components, inconsistent orientation of photovoltaic components or differences in electrical specifications of photovoltaic components in a photovoltaic power station on power generation is reduced, to implement a maximum output power of a power module and increase power generation of a photovoltaic system.

An inverter communicates with an optimizer through a power line communication (PLC) in a solar photovoltaic power generation system with an optimizer. The inverter includes a master node controller of a PLC and the optimizer serves as a slave node of the PLC. The master node of the inverter needs to be informed of topology information on the optimizers in the inverter system in order to perform a command control and a state query in a later operation process, after the optimizer and the inverter in the solar photovoltaic power generation system are installed. If the inverter does not obtain the topology information on the optimizers, the inverter may acquire, in a case of searching for the optimizers, information of optimizers in other systems due to a crosstalk problem, affecting determination of the master node of the inverter and leading to error control of the master node.

At present, topology information on each optimizer is usually manually entered in sequence after a photovoltaic system is installed. During actual operation and work of a photovoltaic system, some optimizers may be damaged or the photovoltaic string needs to be expanded. In this case, the damaged optimizer needs to be replaced or a new optimizer needs to be added. If a manual entry process is performed every time an optimizer is replaced or added, the times of manual operation and maintenance has been increased, which wastes a lot of time.

### SUMMARY

A photovoltaic system and an updating method of networking of optimizers in a photovoltaic system are provided according to the present application, to solve a problem of increased times of manual operation and maintenance and wasted time due to manual entry for updating networking information on the optimizers.

Following technical solutions are provided according to the present application to solve the above problem.

In a first aspect, an updating method of networking of optimizers in a photovoltaic system is provided according to an embodiment of the present application. The photovoltaic system includes: an inverter and photovoltaic strings connected to Boost circuits at a preceding stage of a direct current bus of the inverter. The updating method of networking of the optimizer in the photovoltaic system includes:
obtaining, by the inverter, serial numbers of the optimizers in the photovoltaic strings within a preset time;
determining, by the inverter, whether the optimizers corresponding to the serial numbers have been networked;
in a case that at least one optimizer has not been networked, controlling or keeping, by the inverter, the optimizer that has been networked to operate, and controlling, by the inverter, the optimizer that has not been networked in an active bypass state; and
comparing, by the inverter, an output current of the optimizer that has not been networked with a current of each photovoltaic string, to determine a photovoltaic string to which the optimizer that has not been networked is provided.

In an embodiment, determining, by the inverter, whether the optimizers corresponding to the serial numbers have been networked includes:
determining by the inverter, whether each of the serial numbers is stored in the inverter;
determining by the inverter, that the optimizer corresponding to the stored serial number has been networked; and
determining by the inverter, that the optimizer, corresponding to the serial number which is not stored, has not been networked.

In an embodiment, controlling or keeping, by the inverter, the optimizer that has been networked to operate includes:
keeping, by the inverter, the optimizer that has been networked to operate, in a case that the inverter is in an operation state; and
controlling by the inverter, the optimizer that has been networked to operate after starting, in a case that the inverter is not in the operation state;

In an embodiment, controlling the optimizer that has not been networked in the active bypass state includes:
sending an active bypass command to the optimizers that have not been networked sequentially or simultaneously to switch the optimizers to the active bypass state.

In an embodiment, comparing, by the inverter, an output current of the optimizer that has not been networked with the current of each photovoltaic string to determine a photovoltaic string to which the optimizer that has not been networked provided include:
determining, by the inverter, a difference between the output current of the optimizer that has not been networked and the current of each photovoltaic string; and
in a case that the difference between the output current of the optimizer that has not been networked and the current of one photovoltaic string is less than or equal to a preset difference, determining, by the inverter, that the optimizer is provided to the photovoltaic string.

In an embodiment, after determining that the at least one optimizer has not been networked, the methods further includes:
determining, by the inverter, whether a number of optimizer that has not been networked is less than a preset number;
in a case that the number of optimizer that has not been networked is less than the preset number, performing the step of controlling or keeping, by the inverter, the optimizer that has been networked to operate and the step of controlling, by the inverter, the optimizer that has not been networked in the active bypass state; and
in a case that the number of optimizer that has not been networked is equal to or greater than the preset number, setting, by the inverter, an output voltage limit value and/or an output current limit value for each of the optimizers, and controlling each of the optimizers to start; and controlling, by the inverter, input terminals of the Boost circuits to maintain a short-circuited state for a preset duration according to a preset rule respectively, and determining, by the inverter, the optimizers connected to the respective Boost circuits according to output electrical parameters of the optimizers in the short-circuited state, and marking topology information on the optimizers according to the serial numbers to complete networking of the optimizers.

In an embodiment, the output electrical parameter includes: output voltage and/or output current; and
the determining, by the inverter, the optimizers connected to the input terminals of the respective Boost circuits according to output electrical parameters of the optimizers in the short-circuited states includes:
in a case of an input terminal of one Boost circuit in the short-circuited state at a time, determining, by the inverter, that the optimizer with an output voltage equal to zero and/or an output current greater than a preset current or equal to the output current limit value is connected to the Boost circuit having the input terminal in the short-circuited state; and determining, by the inverter, that the optimizers with an output voltage not equal to zero and/or an output current equal to zero is not connected to the Boost circuit having the input terminal in the short-circuited state.

In an embodiment, the controlling, by the inverter, the input terminals of the Boost circuits to maintain the short-circuit state for the preset duration according to the preset rule respectively includes:
controlling, by the inverter, the input terminals of the Boost circuits one by one to maintain the short-circuit state for the preset duration; or
grouping, by the inverter, the Boost circuits, controlling input terminals of part of the Boost circuits in a current group to maintain the short-circuited state for the preset duration; and further grouping the Boost circuits in the current group according to states of the input terminals of the Boost circuits, until the current group includes one Boost circuit.

In an embodiment, after determining the optimizers connected to the respective Boost circuits, the method further includes:
determining, by the inverter, whether electrical states of the optimizers in parallel-connected photovoltaic strings connected to one Boost circuit are consistent;
determining, in response to a consistent electrical state, that the parallel-connected photovoltaic strings are the parallel-connected photovoltaic strings without voltage difference;
determining, by the inverter, in response to inconsistent electrical states, that optimizers with an output current greater than the preset positive current or less than the preset negative current are provided in one photovoltaic string; and determining that the photovoltaic strings, other than the one photovoltaic string, are the parallel-connected photovoltaic strings without voltage difference, in a case that the number of photovoltaic strings in the parallel-connected photovoltaic strings is more than 2; and
for the parallel-connected photovoltaic strings without voltage difference, controlling, by the inverter, one optimizer in the parallel-connected photovoltaic strings to change an output voltage at least once; and determining the photovoltaic string to which the optimizer is provided according to electrical states of the optimizers under a control.

In an embodiment, the output voltage is changed by active bypass; or
if the inverter sets the output voltage limit value for each optimizer, after the controlling, by the inverter, each of the optimizers to start, the method further includes: controlling, by the inverter, the output voltage of each of the optimizers to reach the output voltage limit value; and the changing the output voltage includes: increasing or decreasing the output voltage limit value.

In an embodiment, the electrical state includes: at least one of an output voltage, an output current and an operation state;
The determining the photovoltaic string to which the optimizer is provided according to electrical states of the optimizers under a control, includes:
in a case that the output voltage of the optimizer is decreased, determining an optimizer satisfying at least one condition of an output voltage equal to the output voltage limit value, an output current equal to a negative output current limit value, and the operation state in a reverse input state, and determining that the optimizer satisfying at least one condition is provided in a same photovoltaic string as the optimizer having the changed output voltage;
in a case that the output voltage of the optimizer is increased, determining an optimizer satisfying at least one condition of an output voltage less than the output voltage limit value, the output current equal to a positive output current limit value, and the operation state in a positive output state, and determining that the optimizer satisfying at least one condition is provided in a same photovoltaic string as the optimizer having the changed output voltage; and
determining that the optimizers, rather than the determined optimizer, are provided in other photovoltaic strings.

In an embodiment, after comparing, by the inverter, an output current of the optimizer that has not been networked with a current of each photovoltaic string, the method further includes:
if a difference between currents of at least two photovoltaic strings is within a preset range, controlling, by the inverter, the Boost circuits one by one to change the input voltages of the Boost circuits at least once; and
each time the input voltage of the Boost circuit is changed, performing the step of comparing by the inverter the output current of the optimizer that has not been networked with the current of each photovoltaic string once, until the photovoltaic strings to which all of the optimizers that have not been networked are determined.

In an embodiment, after each time the voltage of the inverter is changed, performing the step of comparing by the inverter the output current of the optimizer that has not been networked with the current of each photovoltaic string once, the method further includes:
in a case that at least one optimizer has not been networked and the output current of the at least one optimizer that has not been networked does not match a current of each of photovoltaic strings, determining that the optimizer is not included in the photovoltaic system.

In a second aspect, a photovoltaic system is provided according to an embodiment of the present application. The photovoltaic system includes: an inverter and at least one photovoltaic string.

An optimizer or at least two optimizers having output terminals connected in series are arranged between two terminals of the photovoltaic string, and an input terminal of the optimizer is connected to at least one photovoltaic module;
at least one Boost circuit is provided at a preceding stage of a direct current bus of the inverter, and an input terminal of the Boost circuit is configured to connect at least one corresponding photovoltaic string; and
the inverter comprises a controller serving as a master node to communicate with the optimizer, and the controller is configured to perform any one of the updating methods of networking of optimizers in a photovoltaic system described in the above first aspect.

In an embodiment, the Boost circuit is independent of the inverter.; or
the Boost circuit is integrated in the inverter, and an output terminal of the Boost circuit is connected to a direct current side of an inverter circuit in the inverter through the direct current bus.

In an embodiment, the input terminal of the Boost circuit is connected to a connection port at a direct current side of the inverter, or at a connection port with at least two branches connected in parallel at a direct current side of the inverter; and
the connection port is connected to one photovoltaic string or the connection port is connected to at least two photovoltaic strings in parallel by a bus bar terminal.

An updating method of networking of optimizers in a photovoltaic system provided according to the embodiment of the present application includes: obtaining, by an inverter, serial numbers of optimizers in each photovoltaic string within a preset duration; and determining whether the optimizers corresponding to the serial numbers have been networked. In a case that at least one optimizer has not been networked, the optimizer is determined as a replaced or newly added optimizer, the inverter controls or keeps the optimizer that have been networked to operate, and controls the optimizer that has not been networked in an active bypass state. Then, the inverter compares an output current of the optimizer that has not been networked with a current of each photovoltaic string, to determine the photovoltaic string to which the optimizer that has not been networked is provided. In this way, networking of replacing or adding new optimizer is updated automatically without any manual entry process, to solve a problem of an increased times of manual operation and maintenance and a wasted time.

### BRIEF DESCRIPTION OF THE DRAWINGS

For more clearly illustrating the technical solutions in the embodiments of the present application or in the conventional technology, the drawings referred to for describing the embodiments or the conventional technology are briefly described below. Apparently, the drawings in the following description are only some embodiments of the present application, and other drawings may be obtained by those skilled in the art from the drawings without any creative work.
FIGs. 1 to 4 are four flow charts of updating methods of networking of optimizers in a photovoltaic system according to embodiments of the present application;
FIG. 5 is a schematic diagram of a photovoltaic system according to an embodiment of the present application;
FIG. 6 is a schematic diagram of a photovoltaic string according to an embodiment of the present application;
FIG. 7 is a detailed schematic diagram of a photovoltaic system according to an embodiment of the present application;

### DETAILED DESCRIPTION

Technical solutions of embodiments of the present application are clearly and completely described hereinafter in conjunction with the drawings of the embodiments of the present application. Apparently, the embodiments described in the following are only some embodiments of the present application, rather than all embodiments. Any other embodiments obtained by those skilled in the art based on the embodiments in the present application without any creative work fall into the protection scope of the present application.

The terms "include", "comprise" or any other variants thereof are intended to be non-exclusive. Therefore, a process, method, article or device including a series of elements include not only these elements but also other elements that are not clearly enumerated, or further include elements inherent in the process, method, article or device. Unless expressively limited, the statement "including a..." does not exclude the case that other similar elements may exist in the process, method, article or device including the series of elements.

An updating method of networking of optimizers in a photovoltaic system is provided according to the present application to solve a problem of increased times of manual operation and maintenance and the wasted time due to manual entry for updating networking information on the optimizers.

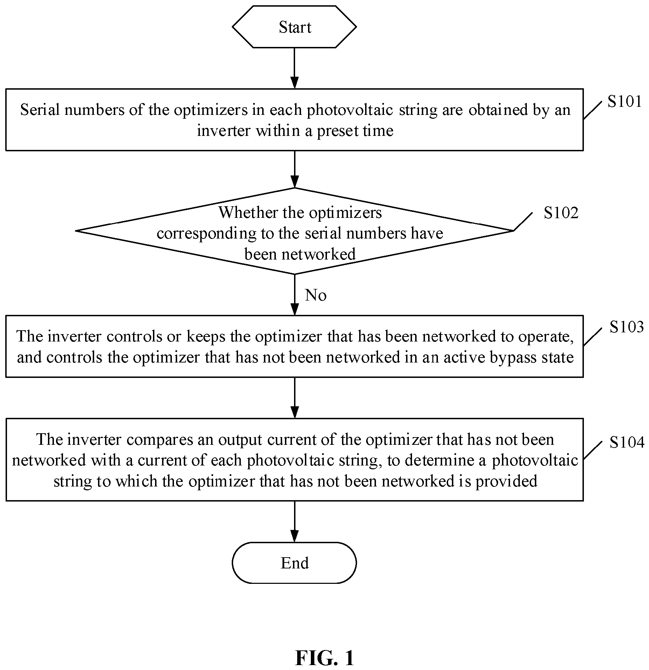

The photovoltaic system includes: an inverter and photovoltaic strings connected to Boost circuits at a preceding stage of a direct current bus of the inverter. As shown in FIG. 1, the updating method of networking of optimizers in the photovoltaic system includes steps S101 to S104.

In step S101, Serial numbers of the optimizers in each photovoltaic string is obtained by the inverter within a preset time.

The serial number refers to an SN number, namely serial no, which is a unique code of each optimizer. The inverter obtains the serial number of each optimizer to distinguish the optimizers.

The preset time includes: a specific moment after the inverter is powered on, and moments at a preset interval after the specific moment.

In an implementation, the inverter actively searches for the optimizer at each above moments. That is, the inverter sends a search command to each optimizer, and the optimizer sends the serial number thereof to the inverter in response to the search command received from the inverter.

In step S102, the inverter determines whether the optimizers corresponding to the serial numbers have been networked.

The optimizers connected to the inverter will be networked after a photovoltaic system is installed. If an optimizer needs to be replaced or added in a subsequent operation process, that is, if a newly installed optimizer needs to be connected to the inverter, the newly installed optimizer can be identified to not be networked according to the serial number of newly installed optimizer. In an embodiment, the inverter can determine whether the serial number is stored in the inverter. The inverter determines that the optimizer corresponding to the serial number which is stored has been networked; and that the optimizer corresponding to the serial number that is not stored have not been networked.

The at least one optimizer which has not been networked means this optimizer is a replaced or newly added optimizer, and the inverter is unable to perform a command control and a state query for the optimizer. Therefore, step S103 needs to be performed.

In step S103, the inverter controls or keeps the optimizer that has been networked to operate, and controls the optimizer that has not been networked in an active bypass state.

The inverter can perform a command control and a state query for the optimizer that has been networked, and can make the optimizer in the operation state. If the inverter is in an operation state, the inverter keeps the optimizer that has been networked to operate. The operation state of the inverter includes a grid-connected operation state and an off-grid operation state with loads, as long as the inverter has a power or current output. If the inverter is not in the operation state, the inverter controls the optimizer that has been networked to start and operate, and then the inverter operates normally on a grid and outputs power.

An inverter may not send an activation command to the optimizer that has not been networked to avoid errors in determination and control of the inverter. Alternatively, the newly installed optimizer will not start automatically because this optimizer is not set up by a certain command.

The inverter can sequentially or simultaneously send an active bypass command to the newly installed optimizer which has been searched by the inverter, that is, the optimizer which has not been networked. The newly installed optimizer is switched to the active bypass state in response to the received active bypass command. At this time, a current of a photovoltaic string to which this optimizer is provided in a normal operation state may flow through an output terminal of this optimizer. Amplitude of the current can be sampled and detected, and then step S104 will be performed.

In step S104, the inverter compares an output current of the optimizer that has not been networked with a current of each photovoltaic string, to determine a photovoltaic string to which the optimizer that has not been networked is provided.

The inverter can obtain an output current of the optimizer by communicating with the optimizer. The inverter can obtain a current of each photovoltaic string by directly sampling. If the output current of the optimizer is equal to a current of one photovoltaic string, a correspondence between the optimizer and the photovoltaic string having the same current as the optimizer can be determined to identify the photovoltaic string to which the optimizer is provided.

In an implementation, in consideration of the effect of sampling accuracy and communication interference, a certain threshold can be set for the comparison result between two currents in practice. That is, the inverter may determine a difference between the output current of the optimizer that has not been networked and a current of a photovoltaic string. Then, when the difference is less than or equal to a preset difference, the inverter may determine that the optimizer is provided to this photovoltaic string. The preset difference may be, but not limited in, 1A, which is depended on application condition, and all of them is within the scope of protection of the present application.

The updating method of networking of optimizers in the photovoltaic system is provided according to the embodiment of the present application to automatically update networking of the replaced or newly added optimizer without any manual entry process, and thus solving the problem of an increased times of manual operation and maintenance and a wasted time.

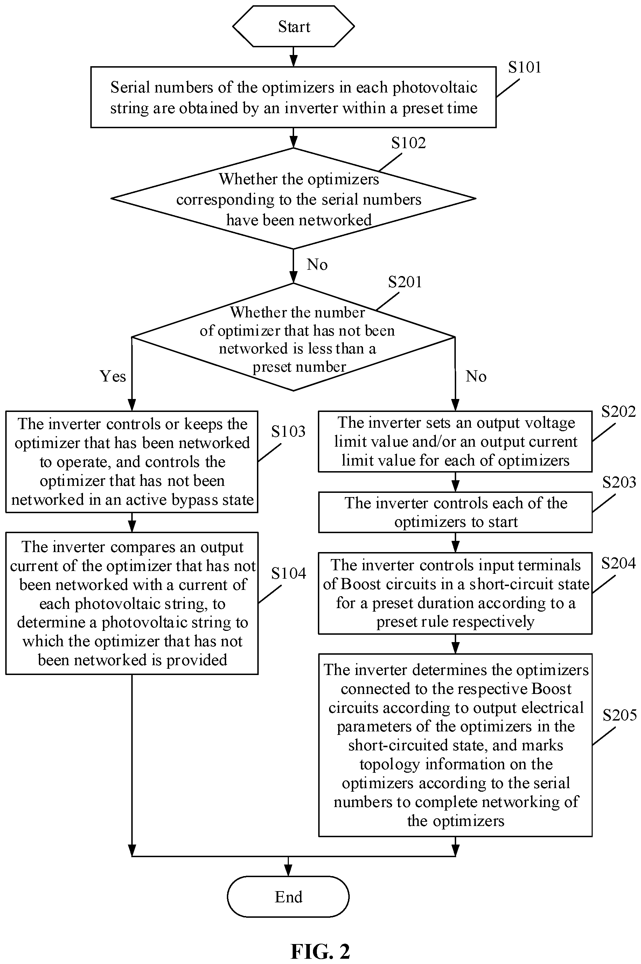

It should be noted that after at least one optimizer which has not been networked is determined in the above embodiment, the inverter may determine the number of these optimizers that have not been networked. If the number is large, power generation capacity and efficiency of an inverter cannot be guaranteed even if other optimizers are controlled to operate normally. Therefore, another updating method of networking of optimizers in a photovoltaic system is provided based on the previous embodiment of the present application. Referring to FIG. 2, after the at least one optimizer which has not been networked is determined, the updating method further includes the following steps.

In step S201, the inverter determines whether the number of optimizer that has not been networked is less than a preset number.

The preset number may be, but not limited in, 20% of the total number of optimizers in the photovoltaic system, which is depended on the specific application condition, and all of them may fall in the scope of protection of the present application.

If the number of optimizer that has not been networked is less than the preset number, step S103 is performed. In step 103, the inverter controls or keeps the optimizer that has been networked to operate; and controls the optimizer that has not been networked in the active bypass state.

If the number of optimizer that has not been networked is greater than or equal to a preset number, step S202 to step S205 are performed.

In step S202, the inverter sets an output voltage limit value and/or an output current limit value for each of optimizers.

When the photovoltaic modules connected to input terminals of the respective optimizers can provide normal operation voltage, the optimizers may enter a safe mode or shutdown mode. At this time, the output voltage of the optimizer is 1V. Then, the inverter may send a networking mode setting command to each optimizer. The networking mode setting command includes an output voltage limit value Ulmt and an output current limit value Ilmt. In practical applications, the output voltage limit value Ulm can be set as 10V and the output current limit value Ilmt can be set as 2A, which should not be limited herein.

In step S203, the inverter controls each of the optimizers to start.

In practical applications, the inverter may broadcast an activation command to each of the optimizers. In response to the activation command, the optimizer may switch into an operation mode, start soft-starting, and gradually increase the output voltage, until the output voltage reaches the output voltage limit value Ulmt, or until the output voltage reaches a rated output voltage of the optimizer in the case of not setting the output voltage limit value Ulmt.

In step S204, the inverter controls input terminals of Boost circuits in a short-circuit state for a preset duration according to a preset rule, respectively.

In practical applications, the step S204 may be implemented through: controlling, by the inverter, the input terminals of the Boost circuits one by one to maintain the short-circuit state for the preset duration; or grouping, by the inverter, the Boost circuits, controlling input terminals of part of the Boost circuits in a current group to maintain the short-circuited state for the preset duration; and further grouping the Boost circuits in the current group according to states of the input terminals of the Boost circuits, until the current group includes one Boost circuit.

In step S205, the inverter determines the optimizers connected to the respective Boost circuits according to output electrical parameters of the optimizers in the short-circuited state, and marks topology information on the optimizers according to the serial numbers to complete networking of the optimizers.

In practical applications, the output electrical parameter includes: output voltage, and/or output current. In step S205, the inverter determines the optimizers connected to the respective Boost circuits according to the output electrical parameters of the optimizers in the short-circuited states may include: in a case of an input terminal of one Boost circuit in the short-circuited state at a time, determining, by the inverter, that the optimizer with an output voltage equal to zero and/or an output current greater than a preset current or equal to the output current limit value is connected to the Boost circuit having the input terminal in the short-circuited state; and determining, by the inverter, that the optimizers with an output voltage not equal to zero and/or an output current equal to zero is not connected to the Boost circuit having the input terminal in the short-circuited state.

A unified networking of All optimizers can be performed again through steps S202 to S205. In addition, when the serial numbers of the optimizers are searched for the first time after a photovoltaic system is installed and an inverter is powered on, no optimizer has been networked. At this time, an automatic networking of optimizes can also be realized through steps S202 to S205. Therefore, a problem of low efficiency and error-prone caused by manual entry for updating networking information on optimizers in the conventional technology is avoided.

In practical applications, when only a small number of optimizers are replaced or added, the unified networking process of steps S202 to S205 as described above may waste more time. Thus, in the present embodiment, a determination is performed in step S201. When the number of newly installed optimizer is small, networking of optimizers may be updated through steps S103 and S104, to avoid wasting time and ensure the maximize power generation of an inverter.

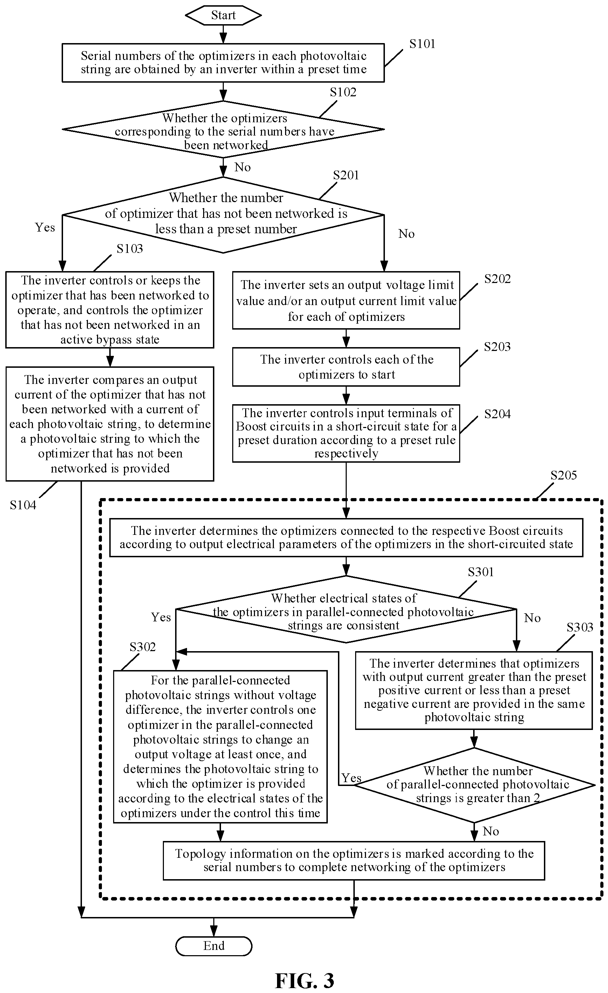

In addition, it should be noted that when the number of photovoltaic strings connected to a Boost circuit is greater than one, the inverter does not determine which optimizers are in the same string. This will affect the determination of an inverter for the long string, lead to setting wrong voltage limit value, and make a sum of output voltages of all optimizers in the whole strings exceeding a voltage that can be withstood by the inverter, and lead to over-voltage damage to the inverter. Therefore, in the above step S205, after the inverter determines the optimizers connected to the respective Boost circuits, step S205 further includes the following steps shown in FIG. 3.

In step S301, an inverter determines whether electrical states of the optimizers in parallel-connected photovoltaic strings connected to each of the Boost circuits are consistent.

If the electrical states of the optimizers are consistent, the parallel-connected photovoltaic strings are determined as parallel-connected photovoltaic strings without voltage difference, and step S302 is performed directly. If the electrical states of the optimizers are inconsistent, step S303 is performed. The photovoltaic strings, other than the photovoltaic string including the optimizer in the inconsistent electrical state, are the parallel-connected photovoltaic strings without voltage difference, in the case that the number of photovoltaic strings in the parallel-connected photovoltaic strings is more than 2. Then, step S302 is performed.

In step S302, for the parallel-connected photovoltaic strings without voltage difference, the inverter controls one optimizer in the parallel-connected photovoltaic strings to change an output voltage at least once, and determines the photovoltaic string to which the optimizer is provided according to the electrical states of the optimizers under the control this time.

In practical applications, the output voltage is changed by an active bypass.

In another embodiment, if the inverter sets the output voltage limit value to each optimizer, after controlling, by the inverter, each of the optimizers to start, the method further includes: controlling, by the inverter, the output voltage of each of the optimizers to reach the output voltage limit value. The output voltage is changed by increasing or decreasing the output voltage limit value.

The electrical state includes: at least one of an output voltage, an output current and an operation state. In step S302, the determining the photovoltaic string to which the optimizer is provided according to the electrical state of the optimizers under the control this time, further includes: in a case that the output voltage of the optimizer is decreased, determining an optimizer satisfying at least one condition of an output voltage equal to the output voltage limit value, an output current equal to a negative output current limit value, and an operating state in a reverse input state, and determining that the optimizer satisfying at least one condition is provided in a same photovoltaic string as the optimizer having the changed output voltage; in a case that the output voltage of the optimizer is increased, determining an optimizer satisfying at least condition of an output voltage less than the output voltage limit value, an output current equal to a positive output current limit value, and an operation state in a positive output state, and determining that the optimizer satisfying at least one condition is provided in a same photovoltaic string as the optimizer having the changed output voltage.

The parallel-connected photovoltaic strings can be divided into a long string and a short string by step S302, which form a loop current. Since electrical states of optimizers in the long string may be different from that in the short string due to the loop current, the photovoltaic strings to which the respective optimizers are provided may be determined according to the electrical states of the optimizers. Thus, the optimizers in the respective photovoltaic strings connected to the Boost circuit can be automatically distinguished, that is, positioning the optimizer to a specific string.

In step S303, the inverter determines that optimizers with output current greater than the preset positive current or less than a preset negative current are provided in the same photovoltaic string.

If electrical states of the optimizers in the parallel-connected photovoltaic strings are inconsistent, it indicates that there is a photovoltaic string with a special length. If this photovoltaic string is a long string relative to other photovoltaic strings, the optimizers in this photovoltaic string are in the positive output state, and provide the output current equal to the positive output current limit value. If this photovoltaic string is a short string relative to other photovoltaic strings, the optimizers in this photovoltaic string are in the reverse input state, and provide an output current equal to the negative output current limit value.

A photovoltaic string with a special length can be identified from the parallel-connected photovoltaic strings by a step S303. If the number of photovoltaic strings in parallel-connected photovoltaic strings is greater than two, the optimizers in at least two photovoltaic strings fail to be positioned to the respective string. In this case, step S302 can be performed to actively generate a long string and a short string, so as to positioning all optimizers to the respective strings.

It should be noted that in practice, multiple photovoltaic strings may have almost the same current. Therefore, an updating method of networking of optimizers in a photovoltaic system is provided according to an embodiment of the present application on the basis of the above embodiment. After a step S104, multiple verifications strategy is performed by controlling the corresponding Boost circuits to ensure that each optimizer that has not been networked is provided in the photovoltaic string.

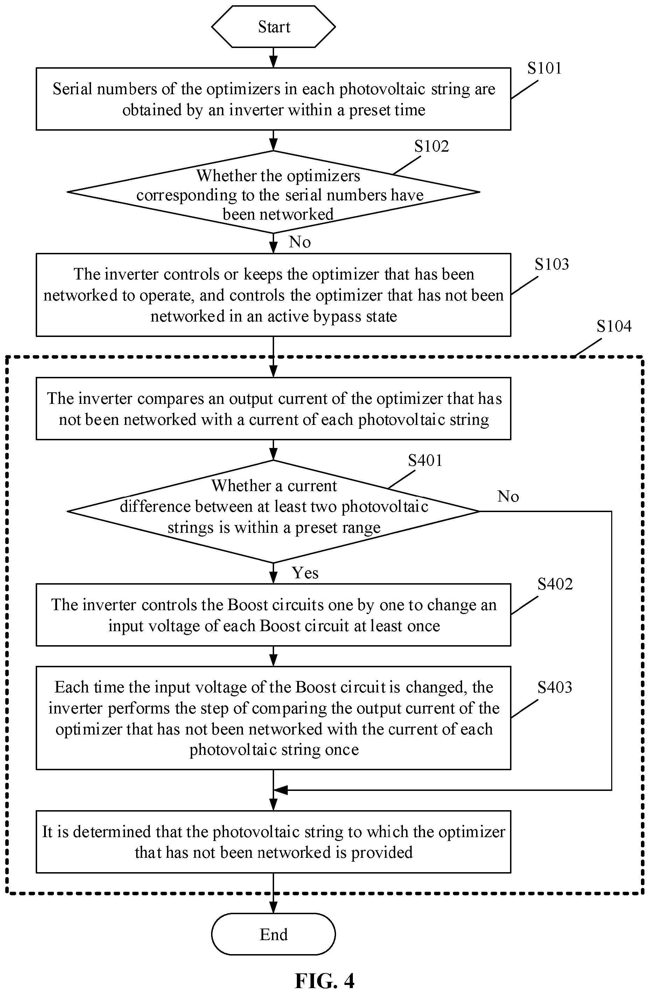

Referring to FIG. 4, an embodiment is shown on a basis of FIG. 1. After the step of comparing, by the inverter, an output current of the optimizer that has not been networked with a current of each photovoltaic string, the updating method of networking of optimizers further includes the following steps from S401 to S403.

In step S401, whether a current difference between at least two photovoltaic strings is within a preset range is determined.

If no current difference is within a preset range, the photovoltaic string to which the optimizer that has not been networked is provided is determined directly. If a current difference is within the preset range, step S402 is performed.

In step S402, the inverter controls the Boost circuits one by one to change an input voltage of each Boost circuit at least once.

The process of step S402 is implemented by: selecting, by an inverter, one Boost circuit at once, and controlling an input voltage of the selected Boost circuit to gradually decrease to at least one state.

In step S403, each time the input voltage of the Boost circuit is changed, the step of comparing by the inverter the output current of the optimizer that has not been networked with the current of each photovoltaic string is performed once.

Multiple verifications are performed, until the photovoltaic strings to which all optimizers that have not been networked are determined. If there is at least one optimizer that has not been networked and the output current of this optimizer does not match currents of all photovoltaic strings after multiple verifications, it is determined that this optimizer does not belong to this photovoltaic system.

In the solution of automatically positioning the new installed optimizer to the photovoltaic string according to the embodiments of the present application, the newly added optimizers in a photovoltaic system that have already been networked are automatically positioned to the specific photovoltaic string, through searching for optimizers, making optimizers in the active bypass state and controlling Boost circuits, based on multiple matching determinations between the output currents of optimizers and currents at input terminals of Boost circuits (i.e., currents of photovoltaic strings).

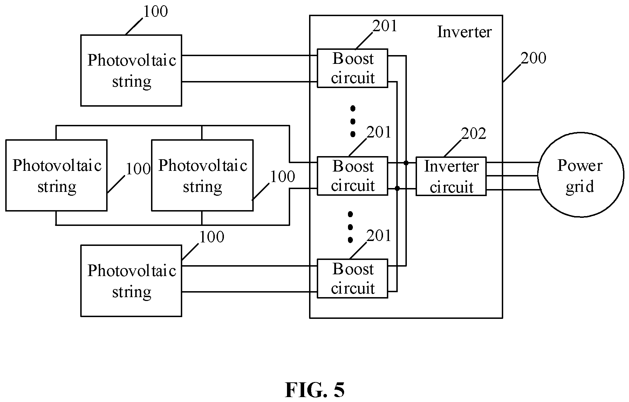

A photovoltaic system is provided according to another embodiment of the present application. As shown in FIG. 5, the system includes: an inverter 200 and at least one photovoltaic string 100.

At least one Boost circuit 201 is provided at a preceding stage of a direct current bus of the inverter 200, and an input terminal of each Boost circuit is configured to connect at least one corresponding photovoltaic string 100.

It should be noted that, as shown in FIG. 5, that all Boost circuit 201 may be integrated in the inverter 200, and output terminals of the Boost circuits 201 are connected to a direct current side of an inverter circuit 202 in the inverter 200 through a direct current bus. In practical applications, each Boost circuit 201 can be independent of the inverter 200 (not shown in drawings), which is depended on the specific application condition, all of them is within the scope of protection of the present application.

The inverter 200 is connected to an applicable single-phase or three-phase power grid based on different models of the inverter 200.

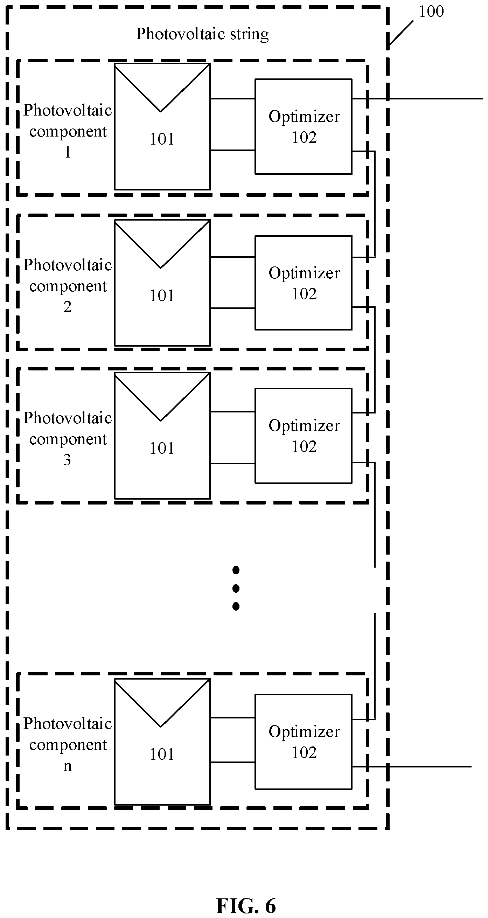

As shown in FIG. 6, one optimizer 102 or at least two optimizers 102 having output terminals connected in series are arranged between two terminals of the photovoltaic string 100, and an input terminal of the optimizer 102 is connected to at least one photovoltaic module 101.

The inverter 200 includes a controller. The controller serves as a master node, which communicates with each of optimizers 102, and is configured to perform any one of the above updating methods of networking of optimizers in the photovoltaic system. The implementation process and principle of the method can be made reference to the above embodiments, which will not be repeated herein.

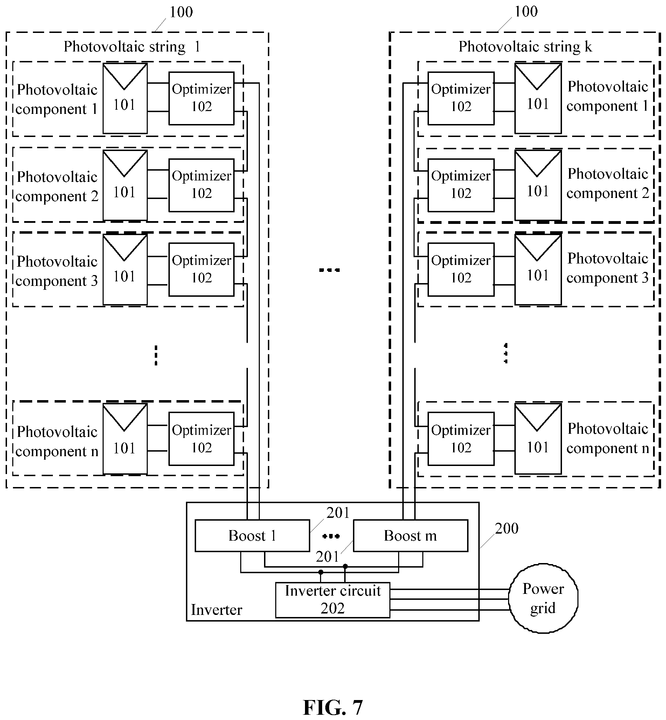

As shown in FIG. 5 and FIG. 7, a main circuit of the inverter 200 includes an inverter circuit 202 and at least one Boost circuit 201. For example, the inverter 200 can include m Boost circuits (Boost 1 to Boost m as shown in FIG. 7), where m can be a positive integer greater than or equal to 1.

In practical applications, an input terminal of each Boost circuit 201 may be connected to one connection port at a direct current side of an inverter 200, or may be connected to at least two connection ports connected in parallel at the direct current side of an inverter 200. The settings of input terminals of respective Boost circuits 201may be the same or different, depending on the specific application condition, which is all within the scope of protection of the present application. A connection port connected to the input terminal of each Boost circuit 201 may be connected to a photovoltaic string 100, or may be connected to at least two photovoltaic strings 100 connected in parallel by a bus bar terminal, which is depended on the specific application condition, and is within the scope of protection of the present application.

In an embodiment, each Boost circuit 201 includes an input terminal, which may be called an MPPT port. Each MPPT port may be divided into two parallel-connected connection ports in the inverter 200, which are called PV ports. Alternatively, each MPPT port may directly serve as a PV port. Each PV port can be connected to one photovoltaic string 100, or two photovoltaic strings 100 connected in parallel through the bus bar terminal. One system may be connected to at least two photovoltaic strings 100.

Referring made to FIG. 6 and FIG. 7, it is assumed that each photovoltaic string 100 includes n photovoltaic components (such as photovoltaic component 1 to photovoltaic component n, as shown in FIG. 6 and FIG. 7), where n is a positive integer greater than or equal to 2. If the inverter 200 is a single-phase inverter, n is less than or equal to 25. If the inverter 200 is a triple-phase inverter, n is less than or equal to 50. Since each photovoltaic component is provided with an optimizer in the system, each photovoltaic component includes a photovoltaic unit and an optimizer 102. The photovoltaic unit includes at least a photovoltaic module 101. The photovoltaic unit is connected to the input terminal of the optimizer 102. The output terminals of all optimizers 102 in the photovoltaic string 100 are connected in series. That is, the optimizer 102 includes a positive output terminal connected to a negative output terminal of a previous optimizer 102, and a negative output terminal connected to a positive output terminal of a next optimizer 102. An output terminal of the last optimizer in the photovoltaic string is connected to a PV port of the inverter 200.

It should be noted that the numbers of photovoltaic components in different photovoltaic strings 100 arranged in the same system may be different. The series-parallel connection modes of photovoltaic strings 100 connected to different MPPT ports may be different, and powers of photovoltaic units may be different.

In practical applications, referring to FIG. 7, k photovoltaic strings 100 (photovoltaic string 1 to photovoltaic string k, as shown in FIG. 7) are connected to m Boost circuits in the inverter 200. Each MPPT port may not connected to any photovoltaic string 100, as well as connected to one to three photovoltaic strings 100, which is depended on the specific application condition and is within the scope of protection of the present application. Among these photovoltaic strings, t newly installed optimizers are unevenly distributed among these k photovoltaic strings.

The main steps of the updating method of networking of optimizers will be described as follows.

### (1) Searching for an optimizer.

The step of searching for the optimizer may include steps S101 and S 102. In step 1, a master node of the inverter actively searches for information on optimizers when the inverter is powered on and in a fixed interval after the inverter is powered on. Once receiving a search instruction from an inverter, the optimizer that has not been networked will send the serial number thereof to the master node of the inverter. If information on the optimizer is not stored in the master node of inverter, a newly installed optimizer is found.

The step of searching for the optimizer may further include step S201 in the above embodiment. That is, after searching for the newly installed optimizer, the inverter may determine that a small number of optimizers are added, i.e., that the number of newly installed optimizers is less than a certain preset value (i.e., the preset number); or that the inverter is in the grid-connected operation. In this case, an automatic positioning solution is triggered. When the inverter is not in the grid-connected operation, the master node of the inverter starts the optimizers that have been networked, and the inverter operates normally on the grid and outputs power. The master node of the inverter may not send the activation command to the newly installed optimizer; or the newly installed optimizer does not start by default because the newly installed optimizer has not been set by a certain instruction.

### (2) bypassing the optimizer

The step of bypassing the optimizer mainly includes: step S103 of controlling the optimizer that has not been networked in an active bypass state and step S 104 in the above embodiment.

An active bypass command is sequentially or simultaneously sent to the searched and newly installed optimizers. The newly installed optimizers switch into the active bypass state in response to the received active bypass command. At this time, a current of a photovoltaic string to which the optimizer is provided in a normal operation state may flow through the output terminal of the optimizer. Amplitude of the current may be sampled and detected.

The master node of the inverter may read the output current of the newly installed optimizer when the optimizer is actively bypassed, read a current of each photovoltaic string connected to the inverter, and compares the read two currents. If a difference between the output current of the newly installed optimizer and the current of the certain photovoltaic string is less than a preset threshold (i.e., the above preset difference), the newly installed optimizer is determined to be provided in this photovoltaic string. In the case that multiple photovoltaic strings have almost the same current, multiple verifications strategy is performed by controlling the Boost circuits.

### (3) Controlling the Boost circuits

The step of controlling the Boost circuits mainly includes step S402 in the above embodiment. The master node of the inverter may control the voltages of the MPPT ports of the inverter to change sequentially, to change the currents of the respective photovoltaic strings. The voltage of the same MPPT port can be changed several times. After the voltage of the MPPT port is stabilized, the master node of the inverter may read the output current of the newly installed optimizer; and read the current of each photovoltaic string connected to the inverter. If the difference between the output current of the newly installed optimizer and the current of a certain photovoltaic string is less than the preset threshold (i.e., the above preset difference), the newly installed optimizer is determined to be provided to the certain photovoltaic string through multiple verifications.

In addition, if an electrical characteristic of the newly installed optimizer does not match an MPPT port of any Boost circuit after multiple verifications, the newly installed optimizer is determined to not belong to this photovoltaic system.

Through the above process, in the photovoltaic system that has already been networked, the newly installed optimizer can be automatically positioned to a photovoltaic string, which can avoid the manual process of entering information on each optimizer, improve the updating efficiency of networking and reduce the probability of error.

The same or similar parts among the embodiments in the present application may be referred to each other, and each of the embodiments emphasizes differences from other embodiments. In particular, the system or system embodiment is basically similar to the method embodiment, and therefore is described relatively briefly. For relevant details, reference can be made to the corresponding description of the method embodiment. The system and system embodiments described above are only illustrative, in which the units described as separate components may or may not be physically separated, and the components shown as units may or may not be physical units, that is, may be located in one place, or distributed over multiple network elements. Some or all of the modules may be selected as needed to achieve the purpose of the solution of the embodiments. Those skilled in the art can understand and implement the solution without any creative effort.

Those skilled in the art may further realize that the units and algorithm steps of each example described in conjunction with the embodiments disclosed herein can be implemented by electronic hardware, computer software, or a combination of both. In order to clearly illustrate the interchangeability of hardware and software, the modules and steps of each example have been described in general terms of functionality in the above description. Whether these functions are performed in hardware or software depends on the specific application and design constraints of the technical solution. Those skilled in the art may implement the described functionality in various manners for each specific application, while such implementations should not be considered to be beyond the scope of the present application.

Based on the above description of the disclosed embodiments, the features described in the different embodiments in this specification may be replaced or combined with each other, so that those skilled in the art can implement or use the present application. Various modifications to these embodiments will be apparent by those skilled in the art, and the generic principles defined herein may be implemented in other embodiments without departing from the spirit or scope of the present application. Therefore, the present application is not limited to the embodiments described herein, but should be in accordance with the broadest scope consistent with the principle and novel features disclosed herein.

## Claims

1. An updating method of networking of optimizers in a photovoltaic system, wherein the photovoltaic system comprises: an inverter and photovoltaic strings connected to Boost circuits at a preceding stage of a direct current bus of an inverter, and wherein the updating method of networking of the optimizers comprises:
obtaining, by the inverter, serial numbers of the optimizers in the photovoltaic strings within a preset time;
determining, by the inverter, whether the optimizers corresponding to the serial numbers has been networked;
in a case that at least one optimizer has not been networked, controlling or keeping, by the inverter, the optimizer that has been networked to operate, and controlling, by the inverter, the optimizer that has not been networked in an active bypass state; and
comparing, by the inverter, an output current of the optimizer that has not been networked with a current of each photovoltaic string, to determine a photovoltaic string to which the optimizer that has not been networked is provided.

2. The updating method of networking of the optimizers in the photovoltaic system according to claim 1, wherein the determining, by the inverter, whether the optimizers corresponding to the serial numbers has been networked comprises:
determining, by the inverter, whether the serial numbers is stored in the inverter;
determining, by the inverter, that an optimizer corresponding to a stored serial number has been networked; and
determining, by the inverter, that an optimizer, corresponding to a serial number which is not stored, has not been networked.

3. The updating method of networking of the optimizers in the photovoltaic system according to claim 1, wherein the controlling or keeping, by the inverter, the optimizer that has been networked to operate comprises:
keeping, by the inverter, the optimizer that has been networked to operate, in a case that the inverter is in an operation state; and
controlling, by the inverter, the optimizer that has been networked to operate after starting, in a case that the inverter is not in the operation state.

4. The updating method of networking of the optimizers in the photovoltaic system according to claim 1, wherein the controlling, by the inverter, the optimizer that has not been networked in the active bypass state comprises:
sending an active bypass command to the optimizers that have not been networked sequentially or simultaneously, to switch the optimizers to the active bypass state.

5. The updating method of networking of the optimizers in the photovoltaic system according to claim 1, wherein the comparing, by the inverter, the output current of the optimizer that has not been networked with the current of each photovoltaic string, to determine the photovoltaic string to which the optimizer that has not been networked is provided, comprises:
determining, by the inverter, a difference between the output current of the optimizer that has not been networked and the current of each photovoltaic string; and
in a case that the difference between the output current of the optimizer that has not been networked and the current of one photovoltaic string is less than or equal to a preset difference, determining, by the inverter, that the optimizer is provided to the photovoltaic string.

6. The updating method of networking of the optimizers in the photovoltaic system according to claim 1, wherein after determining that at least one optimizer has not been networked, the updating method further comprises:
determining, by the inverter, whether a number of optimizer that has not been networked is less than a preset number;
in a case that the number of optimizer that has not been networked is less than the preset number, performing the step of controlling or keeping, by the inverter, the optimizer that have been networked to operate; and controlling, by the inverter, the optimizer that has not been networked in the active bypass state; and
in a case that the number of optimizer that has not been networked is equal to or greater than the preset number, setting, by the inverter, an output voltage limit value and/or an output current limit value for each of the optimizers, and controlling each of the optimizers to start; and controlling, by the inverter, input terminals of the Boost circuits to maintain a short-circuit state for a preset duration according to a preset rule respectively, and determining by the inverter the optimizers connected to the respective Boost circuits according to output electrical parameters of the optimizers in the short-circuit state, and marking topology information on the optimizers according to the serial numbers to complete networking of the optimizers.

7. The updating method of networking of the optimizers in the photovoltaic system according to claim 6, wherein the output electrical parameter include: output voltage and/or output current; and
the determining, by the inverter, the optimizers connected to the respective Boost circuits according to output electrical parameters of the optimizers in the short-circuit state comprises:
in a case of an input terminal of one Boost circuit in the short-circuited state at a time, determining, by the inverter, that the optimizer with an output voltage equal to zero and/or an output current greater than a preset current or equal to the output current limit value is connected to the Boost circuit having the input terminal in the short-circuited state; and determining, by the inverter, that the optimizers with an output voltage not equal to zero and/or an output current equal to zero is not connected to the Boost circuit having the input terminal in the short-circuited state.

8. The updating method of networking of the optimizers in the photovoltaic system according to claim 6, wherein the controlling, by the inverter, input terminals of the Boost circuits to maintain a short-circuit state for a preset duration according to a preset rule respectively comprises:
controlling, by the inverter, the input terminals of the Boost circuits one by one to maintain the short-circuit state for the preset duration; or
grouping, by the inverter, the Boost circuits, controlling input terminals of part of the Boost circuits in a current group to maintain the short-circuited state for the preset duration; and further grouping the Boost circuits in the current group according to states of the input terminals of the Boost circuits, until the current group comprises one Boost circuit.

9. The updating method of networking of the optimizers in the photovoltaic system according to claim 6, wherein after determining the optimizers connected to the respective Boost circuits, the updating method further comprises:
determining, by the inverter, whether electrical states of the optimizers in parallel-connected photovoltaic strings connected to one Boost circuit are consistent;
determining, in response to a consistent electrical state, that the parallel-connected photovoltaic strings are parallel-connected photovoltaic strings without voltage difference;
determining, by the inverter, in response to inconsistent electrical states, that optimizers with an output current greater than the preset positive current or less than the preset negative current are provided in one photovoltaic string; and determining that the photovoltaic strings, other than the one photovoltaic string, are the parallel-connected photovoltaic strings without voltage difference, in a case that a number of photovoltaic strings in the parallel-connected photovoltaic strings is more than 2; and
for the parallel-connected photovoltaic strings without voltage difference, controlling, by the inverter, one optimizer in the parallel-connected photovoltaic strings without voltage difference to change an output voltage at least once; and determining the photovoltaic string to which the optimizer is provided according to electrical states of the optimizers under a control.

10. The updating method of networking of the optimizers in the photovoltaic system according to claim 9, wherein the output voltage of the optimizer is changed by active bypass; or
if the inverter set the output voltage limit value for each of the optimizers, after controlling by the inverter each of the optimizers to start, and the updating method further comprises:
controlling, by the inverter, an output voltage of each of the optimizers to reach the output voltage limit value;
wherein the output voltage of the optimizer is changed by increasing or decreasing the output voltage limit value.

11. The updating method of networking of the optimizers in the photovoltaic system according to claim 9, wherein the electrical state includes: at least one of an output voltage, an output current and an operation state; wherein
the determining the photovoltaic string to which the optimizer is provided according to the electrical states of the optimizers under the control, comprises:
in a case that the output voltage of the optimizer is decreased, determining an optimizer satisfying at least one condition of the output voltage equal to the output voltage limit value, the output current equal to a negative output current limit value, and the operation state in a reverse input state, and determining that the optimizer satisfying at least one condition is provided in a same photovoltaic string as the optimizer having the changed output voltage;
in a case that the output voltage of the optimizer is increased, determining an optimizer satisfying at least one condition of the output voltage less than the output voltage limit value, the output current equal to a positive output current limit value, and the operation state in a positive output state, and determining that the optimizer satisfying at least one condition is provided in a same photovoltaic string as the optimizer having the changed output voltage; and
determining the optimizers, other than the determined optimizer, are provided in other photovoltaic strings.

12. The updating method of networking of the optimizers in the photovoltaic system according to any one of claims 1 to 11, wherein the comparing, by the inverter, the output current of the optimizer that has not been networked with the current of each photovoltaic string, the updating method further comprises:
in a case that a difference between currents of at least two photovoltaic strings is within a preset range, controlling, by the inverter, the Boost circuits one by one to change the input voltages of the Boost circuits at least once; and
each time the input voltage of the Boost circuit is changed, performing the step of comparing, by the inverter, the output current of the optimizer that has not been networked with the current of each photovoltaic string once, until the photovoltaic strings to which all of the optimizers that have not been networked are determined.

13. The updating method of networking of the optimizers in the photovoltaic system according to claim 12, wherein after each time the input voltage of the Boost circuit is changed, performing the step of comparing, by the inverter, the output current of the optimizer that has not been networked with the current of each photovoltaic string once, the updating method further comprises:
in a case that at least one optimizer has not been networked and the output current of the at least one optimizer that has not been networked does not match a current of each of the photovoltaic strings, determining that the at least one optimizer is not included in the photovoltaic system.

14. A photovoltaic system, comprising: an inverter and at least one photovoltaic string,
wherein an optimizer or at least two optimizers having output terminals connected in series are arranged between two terminals of the photovoltaic string, and an input terminal of the optimizer is connected to at least one photovoltaic module;
at least one Boost circuit is provided at a preceding stage of a direct current bus of the inverter, and an input terminal of the Boost circuit is configured to connect to at least a corresponding photovoltaic string; and
the inverter comprises a controller serving as a master node to communicate with the optimizer, and the controller is configured to perform the updating method of networking of the optimizers in the photovoltaic system according to any one of claims 1 to 13.

15. The photovoltaic system according to claim 14, wherein the Boost circuit is independent of the inverter; or
the Boost circuit is integrated in the inverter, and an output terminal of the Boost circuit is connected to a direct current side of an inverter circuit in the inverter through the direct current bus.

16. The photovoltaic system according to claim 14 or 15, wherein the input terminal of the Boost circuit is connected to a connection port at a direct current side of the inverter, or at a connection port with at least two branches connected in parallel at a direct current side of the inverter; and
the connection port is connected to one photovoltaic string or, the connection port is connected to at least two photovoltaic strings in parallel by a bus bar terminal.
